(19) Europäisches Patentamt / European Patent Office / Office européen des brevets

(11) **EP 3 093 134 A1**

(12) **EUROPEAN PATENT APPLICATION**
published in accordance with Art. 153(4) EPC

(43) Date of publication:
**16.11.2016 Bulletin 2016/46**

(21) Application number: **15734871.5**

(22) Date of filing: **08.01.2015**

(51) Int Cl.:
*B32B 1/00* (2006.01)          *B29C 47/02* (2006.01)
*B32B 15/08* (2006.01)         *C08K 7/02* (2006.01)
*C08L 77/00* (2006.01)         *C08L 77/02* (2006.01)
*B29L 9/00* (2006.01)

(86) International application number:
**PCT/JP2015/050352**

(87) International publication number:
**WO 2015/105139 (16.07.2015 Gazette 2015/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.01.2014 JP 2014002169**

(71) Applicants:
- **Nippon Steel & Sumitomo Metal Corporation
  Tokyo 100-8071 (JP)**
- **Hien Electric Industries, Ltd.
  Fukuchiyama-shi, Kyoto 620-0853 (JP)**
- **Namitei Co., Ltd.
  Higashiosaka-shi, Osaka 577-0042 (JP)**

(72) Inventors:
- **CHIKIRI Kazuyoshi
  Fukuchiyama-shi
  Kyoto 620-0853 (JP)**
- **KOBAYASHI Toshiyuki
  Fukuchiyama-shi
  Kyoto 620-0853 (JP)**
- **SUGIYAMA Toshio
  Fukuchiyama-shi
  Kyoto 620-0853 (JP)**

- **YOSHIDA Makoto
  Fukuchiyama-shi
  Kyoto 620-0853 (JP)**
- **MURAO Masatsugu
  Higashiosaka-shi
  Osaka 577-0042 (JP)**
- **MURAO Koichi
  Higashiosaka-shi
  Osaka 577-0042 (JP)**
- **OYAMADA Ken
  Higashiosaka-shi
  Osaka 577-0042 (JP)**
- **OZAKI Mitsunori
  Higashiosaka-shi
  Osaka 577-0042 (JP)**
- **YATABE Hiroshi
  Tokyo 100-8071 (JP)**
- **ISO Arata
  Tokyo 100-8071 (JP)**
- **OOBA Hiroshi
  Tokyo 100-8071 (JP)**

(74) Representative: **Vossius & Partner
Patentanwälte Rechtsanwälte mbB
Siebertstrasse 3
81675 München (DE)**

(54) **RESIN-COATED HIGH-TENSION FLAT STEEL WIRE AND PRODUCTION METHOD THEREFOR**

(57) A resin-coated high-tension flat steel wire includes a high-tension flat steel wire and a fiber-reinforced polyamide resin coated layer. A shape of the high-tension flat steel wire when viewed from a section perpendicular to a longitudinal direction thereof is a rectangular shape including curved portions at four corners thereof. When, among four straight lines that form the rectangular section, the ranges from both end points of the straight lines that form long sides to one fourth of the length of the straight lines are respectively defined as one-fourth segments, a shape of the fiber-reinforced polyamide resin coated layer in the rectangular section includes a mountain shape having an apex within each of the one-fourth segments, and includes a minimum point, where the thickness of the fiber-reinforced polyamide resin coated layer is the minimum, between the apex and both the ends within each of the one-fourth segments.

EP 3 093 134 A1

FIG. 4

**Description**

[Technical Field of the Invention]

The present invention relates to a resin-coated high-tension flat steel wire and a production method therefor.
Priority is claimed on Japanese Patent Application No. 2014-002169, filed January 9, 2014, the content of which is incorporated herein by reference.

[Related Art]

Steel materials, such as steel bars or steel wires, may be coated with a resin and used.
Patent Document 1 discloses a method of pre-heating a steel material, performing primary coating on the surface of the steel material with an elastic thermoplastic resin containing an adhesion accelerator, and subsequently performing secondary coating by fusing a hard thermoplastic resin to the surface of the primary coating.
Patent Document 2 discloses a method of passing a deformed steel bar through a synthetic resin molding machine for coating, performing coating on an outer peripheral surface of the deformed steel bar with thermoplastic resin, and then, shaping the outer shape of the coated deformed steel bar with a shaping member arranged on an outer peripheral side of the coated deformed steel bar while sending the coated deformed steel bar.
Patent Document 3 discloses a steel material coated with a resin film. The resin film has, as a main component, a polyvinyl butyral resin in which the degree of butyralization is 40 mol% to 85 mol% and the content proportion of hydroxyl groups in molecules is restricted to a range 11 wt% to 27 wt%, consists of a mixture obtained by adding 5 wt% or less of an organic antioxidant to the polyvinyl butyral resin, and is adhered to and formed on the surface of the steel material.
However, there has been a demand for coated high-tension flat steel wires having a high strength and having an elasticity.
For example, in flexible pipes used in the seas, such as submarine cables or pipes for the submarine conveyance of petroleum, it is general that an interlock pipe, an inner tube, an internal pressure reinforcing strip, an axial force reinforcing strip, and an external sheath are arranged sequentially from the inside of each flexible pipe. Particularly when the flexible pipes are used in deep seas, an internal pressure reinforcing strip or an axial force reinforcing strip having a high strength and having an elasticity that can withstand the wave motion of waves is required.
Additionally, a serious problem may occur in that the lifespan of a flexible pipe used for the pipes for the submarine conveyance of petroleum may decrease.
If this problem is described, the crude oil drawn up from deep seas using the pipes for the submarine conveyance of petroleum has a high temperature, and contains corrosive gas, such as a hydrogen sulfide. In this case, the inner tube cannot cut off the corrosive gas completely. Therefore, the corrosive gas of which the temperature has become high is retained within a reinforcing layer that is a space between the external sheath and the inner tube, and forms a corrosive atmosphere. Since the internal pressure reinforcing strip and the axial force reinforcing strip that are steel materials are exposed to the corrosive atmosphere and deteriorates, the above-described lifespan decrease occurs.
As a countermeasure against this corrosive atmosphere, it is also possible to use stainless steel 316L for the internal pressure reinforcing strip or the axial force reinforcing strip.
However, the stainless steel 316L has a high cost. Additionally, since stainless steel 316L is also inferior to high-tensile steel in kinetic properties, such as tensile strength, it is necessary to increase the cross-sectional area of the steel wires. In this case, a problem occurs in that the weight of the flexible pipes becomes large and is not suitable for elongated flexible pipes for the deep seas or the like.
Patent Document 4 discloses a high-tension flat steel wire of which the breaking strength is 1900 MPa or more, as a candidate for an axial force reinforcing strip.
Since the high-tension flat steel wire disclosed in Patent Document 4 has a high tensile strength and an elasticity, the cross-sectional area of the steel wire can be made small, and the weight of a flexible pipe can be reduced.
However, in the high-tension flat steel wire disclosed in Patent Document 4, high-durability anti-rust treatment is indispensable as a countermeasure against the corrosive atmosphere. However, in the related-art resin coating treatment, there is a case where a load exceeding 100 MPa may be applied to the resin coated layer in a case where molding work is performed on a high-tensile-steel wire of which the breaking strength is 1400 MPa or more. Thus, the coated resin layer becomes damaged and is unsuitable for being used as an anti-rust article.
Patent Document 5 discloses a martensite wire that is thinly coated with a polymer coating. However, nothing is disclosed regarding the shape of the coated layer.

[Prior Art Document]

[Patent Document]

[Patent Document 1] Japanese Unexamined Patent Application, First Publication No. 2004-043975
[Patent Document 2] Japanese Unexamined Patent Application, First Publication No. 2007-015286
[Patent Document 3] Japanese Unexamined Patent Application, First Publication No. 2011-147845
[Patent Document 4] Japanese Unexamined Patent Application, First Publication No. 2010-229468
[Patent Document 5] Published Japanese Translation No. 2012-527065 of the PCT International Publication

[Disclosure of the Invention]

[Problems to be Solved by the Invention]

An object of the present invention is to provide a resin-coated high-tension flat steel wire that has excellent durability even in a corrosive atmosphere without being able to be caused to a coated layer with respect to stress, such as a pressure or a shearing force generated in secondary work, and a production method therefor.

[Means for Solving the Problem]

The present inventors have found that damage to a coated layer of a resin-coated high-tension flat steel wire is not easily caused even with respect to stress, such as a pressure or a shearing force generated in secondary work, even if the secondary work is performed, in a case where a high-tension flat steel wire (hereinafter referred to as a "resin-coated high-tension flat steel wire") coated with fiber-reinforced polyamide resin has the following features. That is, firstly, the breaking strength of a high-tension flat steel wire before being coated is 1400 MPa or more. Secondly, the shape of the section of the high-tension flat steel wire is a rectangular shape including curved portions at four corners thereof. Thirdly, the coating shape of the fiber-reinforced polyamide resin includes a mountain shape having an apex within each of segments (hereinafter referred to as "one-fourth segments") ranging from both end points (hereinafter referred to as "both end points of long sides") of the long sides that form straight lines of the rectangular section of the high-tension flat steel wire to one fourth of the length of the long sides, and the shape of the mounting shape on the side of both end points of each long side has a point which becomes the minimum within each of the one-fourth segments.
Moreover, the inventors have found that the resin-coated high-tension flat steel wire after the secondary work has high durability even in the corrosive atmosphere when the resin-coated high-tension flat steel wire subjected to the secondary work is referred to as a "resin-coated high-tension flat steel wire after the secondary work".
The present invention has been completed on the basis on the above knowledge, and the concept thereof is as follows.
(1) A first aspect of the present invention is a resin-coated high-tension flat steel wire including a high-tension flat steel wire; and
a fiber-reinforced polyamide resin coated layer having a breaking strength of 60 MPa or more and a tensile elastic modulus of 2000 MPa or more and being adhered to the high-tension flat steel wire via a diluted adhesive,
a shape of the high-tension flat steel wire when viewed from a section perpendicular to a longitudinal direction thereof being a rectangular shape including curved portions at four corners thereof, and
a shape of the fiber-reinforced polyamide resin coated layer in the rectangular section making a pinhole detection proportion in a 1000 V voltage resistance pinhole test of the resin-coated high-tension flat steel wire subjected to the secondary work 0%.
(2) A second aspect of the present invention is a resin-coated high-tension flat steel wire including a high-tension flat steel wire; and a fiber-reinforced polyamide resin coated layer having a breaking strength of 60 MPa or more and a tensile elastic modulus of 2000 MPa or more and being adhered to the high-tension flat steel wire via a diluted adhesive,
the shape of the high-tension flat steel wire when viewed from a section perpendicular to a longitudinal direction thereof being a rectangular shape including curved portions at four corners thereof, and
when, among four straight lines that form the rectangular section, the ranges from both end points of the straight lines that form long sides to one fourth of the length of the straight lines are respectively defined as one-fourth segments, the shape of the fiber-reinforced polyamide resin coated layer in the rectangular section, the shape of the fiber-reinforced polyamide resin coated layer in the rectangular section including a mountain shape that has an apex within each of the one-fourth segments, and including a minimum point, where the thickness of the fiber-reinforced polyamide resin coated layer is the minimum, between the apex and both the ends within each of the one-fourth segments.

(3) In the aspect of the above (2), the thickness of the coated layer may be 1.4 mm to 2.0 mm at the position of the apex, may be 0.4 mm to 1.4 mm at the position of the minimum point, may be 0.5 mm to 1.4 mm at the position of each of the curved portions, and may be 0.7 mm to 1.7 mm at the position of a central portion of each of the long sides.

(4) In the aspect of the above (3), the thickness of the coated layer may be 0.3 mm to 0.8 mm in a central portion of the straight line that forms each of short sides of the rectangular shape.

(5) In the aspect described in any one of the above (1) to (4), the fiber-reinforced polyamide resin may have a compositional ratio of polyamide resin:fiber = 100:15 to 45 in terms of a weight ratio, and the fibers may include only at least one or more of glass fibers, carbon fibers, and inorganic fibers.

(6) In the aspect described in any one of the above (1) to (5), the polyamide resin may be polyamide 12.

(7) In the aspect described in any one of the above (1) to (6), the diluted adhesive may be obtained by diluting bisphenol A type epoxy resin with a solvent in a ratio of epoxy resin:solvent = 3 to 15:100 in terms of a weight ratio.

(8) In the aspect described in any one of the above (1) to (7), the adhesive strength in a 100°C atmosphere between the resin-coated high-tension flat steel wire and a coated resin layer may be 40 N or more per 10 mm width.

(9) In the aspect described in any one of the above aspects (1) to (8), in a section perpendicular to a longitudinal direction of the high-tension flat steel wire, the curved portions at the four corners may form a circular-arc shape, a breaking strength may be 1400 MPa or more, a breaking elongation may be 2% or more, and a twisting value in which the distance between chucks is 500 mm may be 12 times or more.

(10) Additionally, still another aspect of the invention is a production method for a resin-coated high-tension flat steel wire including a process of coating a diluted adhesive on a surface of a high-tension flat steel wire; a process of heating the diluted adhesive to 200°C to 300°C and forming the diluted adhesive into a layer in a half-cured state; and a process of extrusion-coating fiber-reinforced polyamide resin on the diluted adhesive formed into a layer in a half-cured state, using a mold having a predetermined shape when viewed from a section perpendicular to an extrusion direction, in a state where the fiber-reinforced polyamide resin is heated to 220°C to 230°C and melted. The predetermined shape of the mold is a rectangular shape including curved portions at four corners thereof. When, among four straight lines that form the rectangular shape, the ranges from both end points of the straight lines that form long sides to one fourth of the length of the straight lines are respectively defined as one-fourth segments, a recess in which the fiber-reinforced polyamide resin coated layer forms a mountain shape having an apex is provided within each of the one-fourth segments, and a protrusion that forms a minimum thickness portion of the fiber-reinforced polyamide resin coated layer is provided between the apex and both the ends within each of the one-fourth segments.

[Effects of the Invention]

In the resin-coated high-tension flat steel wire related to the aspects described in the above (1) to (9) of the present invention, the resin coated layer consisting of the fiber-reinforced polyamide resin with a high tensile breaking strength and a high tensile elastic modulus forms a specific shape, and is strongly adhered to and coated on the high-tension flat steel wire. Therefore, there are the following significant effects. That is, even if the secondary work is performed, with respect to stress, such as a pressure or a shearing force generated in the secondary work, damage, such as cracks or pinholes, is not caused in the coated layer, and peeling from the high-tension flat steel wire is not caused in the coated layer, excellent durability is exhibited even in an corrosive atmosphere, and lifespan is not lowered even if the invention is used for a flexible pipe or the like.

Additionally, according to the production method for a resin-coated high-tension flat steel wire related to the other aspect described in the above (10), the significant effects that coating can be performed without the performance of a base material being degraded, and the control of coating thickness can be easily performed simply by changing the mold can be exhibited.

[Brief Description of the Drawings]

FIG. 1 is a plan view of a high-tension flat steel wire consisting of a high-strength deformed steel wire, which is applied to the present embodiment.
FIG. 2 is a view showing the high-tension flat steel wire, and is an A-A sectional view of FIG. 1.
FIG. 3 is a schematic view of a production apparatus for a resin-coated high-tension flat steel wire.

FIG. 4 is a view showing the resin-coated high-tension flat steel wire showing an embodiment of the invention, and is a sectional view in a section perpendicular to a longitudinal direction.

FIG. 5 is a schematic view showing twisting work using a twisting work roll apparatus.

FIG. 6 is a view showing a work roll of a twisting work roll apparatus, and is a B-B arrow view of FIG. 5.

FIG. 7 is a schematic view of the resin-coated high-tension flat steel wire after a twisting test.

FIG. 8 is a view showing the resin-coated high-tension flat steel wire before and after the twisting test, and is an F-F sectional view of FIG. 7. (a) shows a state before the work test and (b) shows a state after the work test.

FIG. 9 is a schematic view showing the scheme of a tension test.

FIG. 10 is a schematic view showing the resin-coated high-tension flat steel wire after the tension test.

FIG. 11 is a schematic view showing the scheme of a twisting test.

FIG. 12 is a schematic view showing a bending work test method.

FIG. 13 is a schematic view showing a 90° peeling test method.

FIG. 14 is a schematic view showing the scheme of an SSC test.

FIG. 15 is a view showing a resin-coated high-tension flat steel wire of Invention Example 1, (a) is a sectional view before a twisting test, and (b) is a sectional view after the twisting test.

FIG. 16 is a view showing a resin-coated high-tension flat steel wire of Comparative Example 2, (a) is a sectional view before a twisting test, and (b) is a sectional view after the twisting test.

FIG. 17 is a view showing a resin-coated high-tension flat steel wire of Comparative Example 3, (a) is a sectional view before a twisting test, and (b) is a sectional view after the twisting test.

FIG. 18 is a plan view sectional view showing a mold used for an embodiment of a production method for a resin-coated high-tension flat steel wire of the invention.

[Embodiments of the Invention]

Hereinafter, respective embodiments of a resin-coated high-tension flat steel wire and a production method therefor of the present invention will be described.

(First embodiment)

A first embodiment of the present invention is a resin-coated high-tension flat steel wire described in the following (A) to (I).

(A) A resin-coated high-tension flat steel wire includes a high-tension flat steel wire; and a fiber-reinforced polyamide resin coated layer having a breaking strength of 60 MPa or more and a tensile elastic modulus of 2000 MPa or more and being adhered to the high-tension flat steel wire via a diluted adhesive, wherein
a shape of the high-tension flat steel wire when viewed from a section perpendicular to a longitudinal direction thereof is a rectangular shape including curved portions at four corners thereof, and
a shape of the fiber-reinforced polyamide resin coated layer in the rectangular section makes a pinhole detection proportion in a 1000 V voltage resistance pinhole test of the resin-coated high-tension flat steel wire subjected to the secondary work 0%.
(B) A resin-coated high-tension flat steel wire includes a high-tension flat steel wire; and a fiber-reinforced polyamide resin coated layer having a breaking strength of 60 MPa or more and a tensile elastic modulus of 2000 MPa or more and being adhered to the high-tension flat steel wire via a diluted adhesive, wherein
the shape of the high-tension flat steel wire when viewed from a section perpendicular to a longitudinal direction thereof is a rectangular shape including curved portions at four corners thereof, and
when, among four straight lines that form the rectangular section, the ranges from both end points of the straight lines that form long sides to one fourth of the length of the straight lines are respectively defined as one-fourth segments, the shape of the fiber-reinforced polyamide resin coated layer in the rectangular section, the shape of the fiber-reinforced polyamide resin coated layer in the rectangular section includes a mountain shape having an apex within each of the one-fourth segments, and includes a minimum point, where the thickness of the fiber-reinforced polyamide resin coated layer is the minimum, between the apex and both the ends within each of the one-fourth segments.
(C) In the above embodiment (B), the thickness of the coated layer may be 1.4 mm to 2.0 mm at the position of the apex, may be 0.4 mm to 1.4 mm at the position of the minimum point, may be 0.5 mm to 1.4 mm at the position of each of the curved portions, and may be 0.7 mm to 1.7 mm at the position of a central portion of each of the long sides.
(D) In the above embodiment (C), the thickness of the coated layer may be 0.3 mm 0.8 mm in a central portion of the straight line that forms each of short sides of the rectangular shape.
(E) In any one of the above embodiment (A) to (D), the fiber-reinforced polyamide resin may have a compositional ratio of polyamide resin:fiber = 100:15 to 45 in terms of a weight ratio, and the fibers may include only at least one or more of glass fibers, carbon fibers, and inorganic fibers.

(F) In any one of the above embodiments (A) to (E), the polyamide resin may be polyamide 12.

(G) In any one of the above embodiments (A) to (F), the diluted adhesive may be obtained by diluting a bisphenol A type epoxy resin with a solvent in a ratio of epoxy resin:solvent = 3 to 15:100 in terms of a weight ratio.

(H) In any one of the above embodiments (A) to (G), the adhesive strength in a 100°C atmosphere between the resin-coated high-tension flat steel wire and a coated resin layer may be 40 N or more per 10 mm width.

(I) In the any one of the above embodiments (A) to (H), in a section perpendicular to a longitudinal direction of the high-tension flat steel wire, the curved portions at the four corners may form a circular-arc shape, a breaking strength may be 1400 MPa or more, a breaking elongation may be 2% or more, and a twisting value in which the distance between chucks may be 500 mm is 12 times or more.

<High-tension flat steel wire>

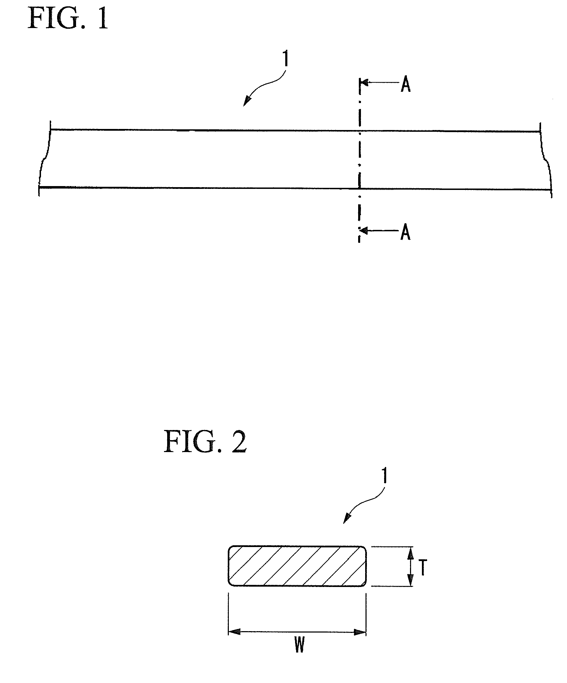

A high-tension flat steel wire applied to the present embodiment will be described with reference to FIGS. 1 and 2.

In FIG. 1, reference sign 1 designates a high-tension flat steel wire applied to the present embodiment.

FIG. 2 is an A-A sectional view of FIG. 1, and the shape of the section is a rectangular shape having curved portions at four corners. In FIG. 2, thickness (T) is 1.0 mm or more and 7.0 mm or less, width (W) is 8 mm or more and 35 mm or less, and a width thickness ratio (W/T) obtained by dividing the width by the thickness is 2 or more and 8 or less. Additionally, the high-tension flat steel wire applied to the present embodiment is excellent in ductility in a tension test according to JIS Z 2241 in which a breaking strength is 1400 MPa or more, a breaking elongation is 2% or more, and a twisting value when the distance between chucks is 500 mm is 12 times or more.

The high-tension flat steel wire applied to the present embodiment is a high-tension flat steel wire of which the thickness (T) is 1.5 mm or more and 6.5 mm or less, the width (W) is 10 mm or more and 30 mm or less, the width thickness ratio (W/T) is 2 or more and 8 or less, the breaking strength is 1400 MPa or more, the breaking elongation is 2% or more, and the twisting value is 12 times or more. In addition, particularly, it is more preferable that the thickness (T) is 2.0 mm or more and 5.0 mm or less, the width (W) is 10 mm or more and 22 mm or less, the width thickness ratio (W/T) is 4 or more and 8 or less, the breaking strength is 1400 MPa or more, the breaking elongation is 2% or more, and the twisting value is 12 times or more.

<Diluted adhesive>

The diluted adhesive means that an epoxy resin is diluted with a solvent.

As the epoxy resin, epoxy resins of a bisphenol A type, a bisphenol F type, and a biphenyl type are preferable. Among them, the bisphenol A type is more preferable.

The solvent may include solvents of aromatic hydrocarbons, esters, ketones, and alcohols. Among them, ketones are more preferable, and methyl ethyl ketone that is easily dissolved when being diluted is particularly preferable.

As the compositional ratio of the epoxy resin and the solvent of the diluted adhesive, epoxy resin:solvent = 3 to 15:100 in terms of a weight ratio is preferable, and 3 to 10:100 is more preferable.

Adhesive strength becomes low in a case where the concentration of the epoxy resin is lower than the above range. On the contrary, if the concentration of the epoxy resin becomes higher than the above range, viscosity becomes higher and it becomes difficult to uniformly coat the epoxy resin on the surface of the high-tension flat steel wire surface. Therefore, adhesive strength decreases. Accordingly, neither is preferable.

<Fiber-reinforced resin>

The fiber-reinforced resin is a fiber-reinforced polyamide resin in which fibers are blended with a polyamide resin. As for the fiber-reinforced polyamide resin, breaking strength is 60 MPa or more, and tensile elastic modulus is 2000 MPa or more. Specifically, the fiber-reinforced polyamide resin may include polyamide 6, polyamide 66, polyamide 11, and polyamide 12. Among them, polyamide 12 that has a low water absorptivity and is chemically dynamically stable is more preferable.

As the fibers, at least one or more of glass fibers, carbon fibers, and inorganic fiber can be used. Among them, the glass fibers only, and a mixture of the glass fibers and the carbon fibers are also preferable.

As for the mixing ratio of the polyamide resin and the fibers, in terms of a weight ratio, resin:fiber = 100:15 to 45 is preferable, and 100:25 to 35 is more preferable.

<Resin coated layer shape>

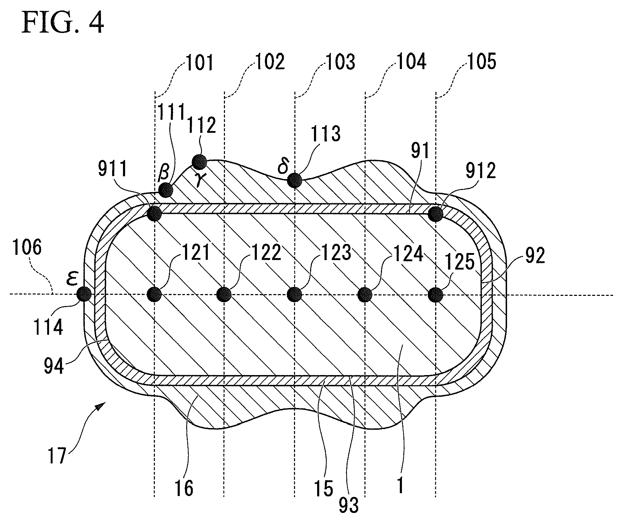

The shape (hereinafter referred to as a "resin coated layer shape") of a fiber-reinforced polyamide resin coated layer (hereinafter referred to as a "resin coated layer") will be described in detail with reference to FIG. 4. Additionally, the shape of the resin coated layer of the present embodiment to be described below may be referred to as "the shape of the invention" in this specification, and a related-art resin coated layer shape may be referred to as a "related-art shape".

FIG. 4 is a sectional view of the resin-coated high-tension flat steel wire that is an embodiment of the invention.

In FIG. 4, in order to assist in understanding of the invention, the shape of the invention is drawn to be laterally and vertically symmetrical. However, the invention is not limited only to this shape.

In FIG. 4, reference sign 17 designates a resin-coated high-tension flat steel wire, reference sign 1 designates a high-tension flat steel wire, reference sign 15 designates a diluted adhesive layer, reference sign 16 designates a resin coated layer, reference sign 106 designates a centerline (a centerline passing through a central position of the high-tension flat steel wire 1 in a thickness direction) of the high-tension flat steel wire 1 in a lateral direction, and reference sign 103 designates a centerline (a centerline that passes through a central position of the high-tension flat steel wire 1 in a width direction) of the high-tension flat steel wire 1 in a longitudinal direction and that is perpendicular to the centerline 106. Reference sign 123 that is an intersection point between the centerline 103 and the centerline 106 is referred to as a center point.

In a rectangular section of the high-tension flat steel wire 1 having the curved portions at the four corners, reference signs 91 and 93 designates long sides, and reference signs 92 and 94 designate short sides. There are a left end point 911 and a right end point 912 of a linear part of the long side 91. Reference signs 101 and 105 designate dotted lines that pass through the left end point 911 and the right end point 912, respectively, and are perpendicular to the centerline 106.

An intersection point 121 between the dotted lines 101 and 106 is referred to as a left end point, and a middle point 122 between the left end point 121 and the center point 123 is referred to as a left middle point. Reference sign 102 designate a dotted line that passes through the left middle point and perpendicular to the centerline 106.

Next, attention is paid to segments (hereinafter referred to as "one-fourth segments") of one fourth of the length of the long side 91 from the left end point 911 and the right end point 912 of the linear part of the long side 91.

In this case, in each one-fourth segment, an apex $\gamma$ of the resin coated layer 16 of the long side 91 is 112, and a minimum point $\beta$ when the thickness of the resin coated layer 16 reaches the minimum is 111. An intersection point $\delta$ between the dotted line 103 and the surface of the resin coated layer 16 is 113.

In this way, in the present embodiment, the resin coated layer 16 has a shape such that the minimum point $\beta$ (111) where the thickness of the resin coated layer 16 in the long side reaches the minimum and the apex $\gamma$ (112) of the resin coated layer 16 are present within each of the one-fourth segments, that is, between the dotted lines 101 and 102 and between the dotted lines 104 and 105.

Moreover, in the one-fourth segment, a shape ranging from the minimum point $\beta$(111) where the thickness of the resin coated layer 16 reaches the minimum to a curved portion of each of the four corners may be flat as shown in FIG. 4 or may be a downward slope shape.

Although the surface of the high-tension flat steel wire is coated with the fiber-reinforced polyamide resin via the diluted adhesive, vicinities of left and right ends of upper and lower long side portions in the rectangular section having the curved portions at the four corners are coated to be thicker than central portions of the upper and lower long side portions, left and right short side portions, and the curved portions of the four corners.

The thickness (hereinafter referred to as "resin coated layer thickness") of the resin coated layer will be described with reference to FIG. 4.

The thickness in the apex $\gamma$ (112) of the resin coated layer 16 is 1.4 mm to 2.0 mm, the thickness in the minimum point $\beta$ (111) where the thickness of the resin coated layer 16 reaches the minimum is 0.4 mm to 1.4 mm, the thickness in the intersection point $\delta$ (113) between the dotted line 103 and the resin coated layer 16 is 0.7 mm to 1.7 mm, the thickness in the curved portions at the four corners is 0.5 mm to 1.4 mm, and the thickness in the central portions $\varepsilon$ (114) of each short side of the rectangular shape is 0.3 mm to 0.8 mm.

Preferably, the thickness in the apex $\gamma$ (112) of the resin coated layer 16 is 1.5 mm to 1.9 mm, the thickness in the minimum point $\beta$ (111) where the thickness of the resin coated layer 16 reaches the minimum is 0.6 mm to 1.3 mm, the thickness in the intersection point $\delta$ (113) between the dotted line 103 and the resin coated layer 16 is 0.9 mm to 1.5 mm, the thickness in the curved portions at the four corners is 0.7 mm to 1.2 mm, and the thickness in the central portion $\varepsilon$ (114) of each short side of the rectangular shape is 0.4 mm to 0.6 mm.

In addition, these numerical values are determined by repeatedly performing secondary work (twisting work) in coated trial products.

As the resin coated layer shape formed in the high-tension flat steel wire takes the above shape, the load of stress to the resin coated layer decreases even in a case where stress, such as a pressure or a shearing force generated in the case of bending work or twisting work in the secondary work of the resin-coated high-tension flat steel wire, exceed 100 MPa.

Particularly the load of the stress in the curved portions at the four corners where damage to the resin coated layer tends to occur is little, and the resin coated layer of the curved portions at the four corners can maintain 60% or more of the resin coated layer thickness before the secondary work, thereby preventing the damage to the resin coated layer.

In the resin-coated high-tension flat steel wire of the present embodiment, the resin coated layer made of the fiber-reinforced polyamide resin with high breaking strength and tensile elastic modulus has the shape of the invention and is firmly adhered to the high-tension flat steel wire surface. Therefore, also by performing the secondary work, such as bending or twisting, cracks or pinholes are not generated in the resin coated layer, and the resin coated layer is not peeled from the high-tension flat steel wire as well.

As for the adhesive strength between the high-tension flat steel wire surface and the resin coated layer, adhesion and coating are performed such that the resin coated layer breaks at 40°C or lower, but the adhesive strength is equal to or more than 70 (N)/(10 mm width) at 80°C, is equal to or more than 40 (N)/(10 mm width) at 100°C, and is equal to or more than 20 (N)/(10 mm width) at the high temperature of 120°C.

(Second embodiment)

A second embodiment of the invention is a production method for a resin-coated high-tension flat steel wire described in the following (J).

(J) A production method for a resin-coated high-tension flat steel wire includes a process of coating a diluted adhesive on the surface of a high-tension flat steel wire; a process of heating the diluted adhesive to 200°C to 300°C and forming the diluted adhesive into a layer in a half-cured state; and a process of extrusion-coating fiber-reinforced polyamide resin on the diluted adhesive formed into a layer in a half-cured state, using a mold having a predetermined shape when viewed from a section perpendicular to an extrusion direction, in a state where the fiber-reinforced polyamide resin is heated to 220°C to 230°C and melted. The predetermined shape of the mold is a rectangular shape including curved portions at four corners thereof. When, among four straight lines that form the rectangular shape, the ranges from both end points of the straight lines that form long sides to one fourth of the length of the straight lines are respectively defined as one-fourth segments, a recess in which the fiber-reinforced polyamide resin coated layer forms a mountain shape having an apex is provided within each of the one-fourth segments, and a protrusion that forms a minimum thickness portion of the fiber-reinforced polyamide resin coated layer is provided between the apex and both the ends within each of the one-fourth segments.

Process 1: surface treatment process

Surface treatment is performed so that the surface of a high-tension flat steel wire becomes a rough surface by a sand blaster or the like. Since the diluted adhesive can be firmly adhered to the surface of the high-tension flat steel wire by the surface treatment, it is desirable to perform the surface treatment.

The degree of roughness of the surface is determined depending on the grain size of abrasive powder used for the sand blaster. For example, in the case of Fuji Random Alumina 46 "A-46", the grain size of abrasive powder is 0.300 mm to 0.355 mm.

Process 2: diluted adhesive coating process

The above-described diluted adhesive is coated on the surface of the high-tension flat steel wire.

Process 3: diluted adhesive heating process

The diluted adhesive is turned into a layer in a half-cured state by heating the diluted adhesive to 200°C to 300°C, and more preferably, 230°C to 260°C with a heating device in the case of epoxy resin:solvent =3:100.

Process 4: fiber-reinforced polyamide resin coating process

A fiber-reinforced polyamide resin is extrusion-coated on the high-tension flat steel wire on which the layer of the diluted adhesive in the half-cured state is formed, using the mold to be described next, in a state where the fiber-reinforced polyamide resin is heated to 220°C to 230°C and melted.

Since a resin coated layer formed after the extrusion coating can be formed in arbitrary shapes by a molding die, the shape of the resin coated layer of the present embodiment is formed by the mold to be described next.

<Mold shape>

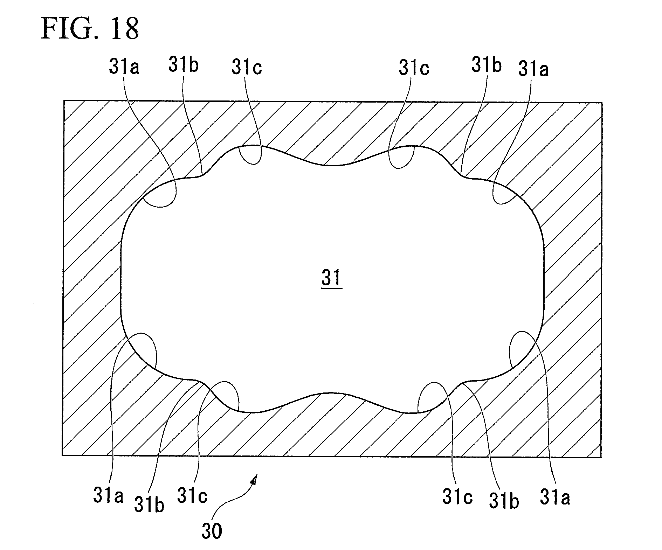

A mold 30 used for the production method of the present embodiment is shown in FIG. 18. The features of the mold 30 are as follows.

A space part 31 of a section of the mold 30 has a rectangular shape in which four corners 31 a are curved. One-fourth segments having the length of one-fourth of a long side from both end points of a linear part of the long side of the rectangular shape have shapes of recesses 31c forming mountain shapes where the polyamide resin coated layer has apexes, and the shapes of the recesses 31c on the side of both the end points of the long side have protrusions 31b that form the minimum thicknesses of the polyamide resin coated layer in the one-fourth segments.

Process 5: cooling process

The high-tension flat steel wire on which the fiber-reinforced polyamide resin is coated is cooled by a cooling device. As the cooling, water cooling using mainly industrial water is performed.

After the cooling, the resin coated layer is formed of the fiber-reinforced polyamide resin of which the breaking strength is 60 MPa or more and the tensile elastic modulus is 2000 MPa.

In addition, the properties of the resin do not change greatly at normal temperature.

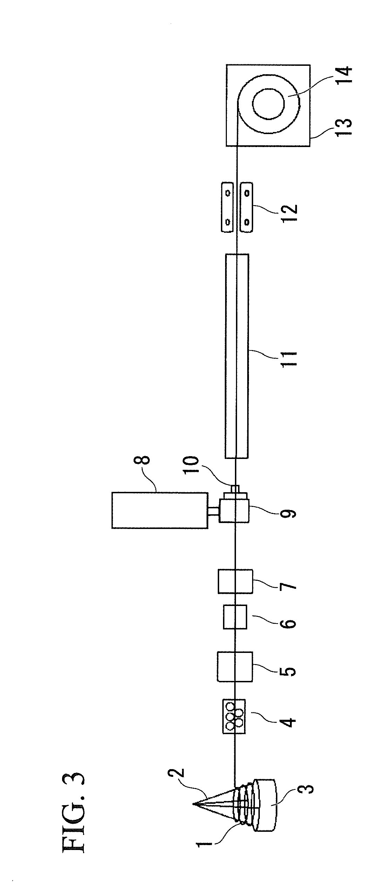

Hereinafter, the production method for a resin-coated high-tension flat steel wire of the present embodiment will be described in detail with reference to FIG. 3.

FIG. 3 is a schematic view of a production apparatus for a resin-coated high-tension flat steel wire.

In FIG. 3, reference sign 1 designates a high-tension flat steel wire, reference sign 2 designates a coil, reference sign 3 designates a delivery device, reference sign 4 designates a wire straightening machine, reference sign 5 designates a sand blaster, reference sign 6 designates a resin coating apparatus, reference sign 7 designates a heating device, reference sign 8 designates an extruder, reference sign 9 designates a cross-head, reference sign 10 designates a molding die, reference sign 11 designates a cooling device, reference sign 12 designates a take-off device, reference sign 13 designates a winding device, and reference sign 14 designates a product coil. Although not shown in FIG. 3, as previously shown in FIG. 4, reference sign 15 designates the diluted adhesive layer, reference sign 16 designates the resin coated layer, and reference sign 17 designates the resin-coated high-tension flat steel wire.

<Surface treatment process>

The coil 2 of the high-tension flat steel wire 1 is continuously sent by the delivery device 3.

The sent high-tension flat steel wire 1 is straightened in a straight line by the wire straightening machine 4. This is because the curling imparted when the coil 2 is wound up is removed. The straightened high-tension flat steel wire 1 is subjected to surface treatment by the sand blaster 5 so that the surface of the high-tension flat steel wire 1 becomes a rough surface.

<Diluted adhesive coating process>

A diluted adhesive is coated on the surface of the high-tension flat steel wire 1.

In addition, ones described in the first embodiment are used as the diluted adhesive.

<Diluted adhesive heating process>

The high-tension flat steel wire 1 coated with the diluted adhesive is introduced into the cross-head 9 of the extruder 8 after the high-tension flat steel wire is heated to 230°C to 260°C by the heating device 7 and the diluted adhesive layer 15 is brought into a half-cured state.

<Fiber-reinforced polyamide resin coating process>

The fiber-reinforced polyamide resin heated to 220°C to 230°C and melted in the extruder 8 is coated on the surface of the diluted adhesive layer 15 by the cross-head 9 to form the resin coated layer 16.

<Cooling process>

The high-tension flat steel wire 1 on which the resin coated layer 16 is formed is cooled by the cooling device 11, is taken off by the take-off device 12, is wound by the winding device 13, and is turned into the product coil 14.

[Example 1]

«Invention Example and Comparative Example»

In Example 1, although the invention is described in detail on the basis of Invention Examples 1 to 9 and Comparative Examples 1 to 6 described in Table 1, the invention is not limited only to the following invention examples.
In addition, the invention examples are produced according to the production method described in this specification.

<High-tension flat steel wire>

The high-tension flat steel wire 1 used for Invention Examples 1 to 9 and Comparative Examples 1 to 5 is as follows.
The high-tension flat steel wire 1 has a rectangular shape in which curved shapes of four corners are circular-arc shapes in a section perpendicular to the longitudinal direction, was 3 mm in thickness, and was 14.5 mm in width. Additionally, as for twisting properties, the twisting value when the distance between chucks is 500 mm was 18.7 rotations, and in the result of a tensile strength test in JIS Z 2241, the breaking intensity was 2000 MPa and the breaking elongation was 5%.

<Diluted adhesive coating>

The high-tension flat steel wire 1 subjected to the surface treatment by, for example, sandblast or the like was coated with diluted adhesive by the resin coating apparatus 6. Adhesive obtained by diluting a bisphenol-A-based epoxy resin solution (trade name; KF-300 made by DAICEL EVONIK LTD.) that is an epoxy resin with methyl ethyl ketone (trade name; IDEMITSU MEK made by IDEMITSU KOSAN CO., LTD.) that is a solvent was used for the diluted adhesive.
The ratio of the epoxy resin and the solvent is defined in terms of a weight ratio.
In Invention Example 1 and Invention Examples 3 to 9, the ratio was epoxy resin:solvent = 3:100.
In Invention Example 2, the ratio was epoxy resin:solvent = 15:100.
In Comparative Example 1, the ratio was epoxy resin:solvent = 25:100.
In Comparative Examples 2 to 5, the ratio was epoxy resin:solvent = 3:100.

[Table 1]

| TYPE | DILUTED ADHESIVE BLENDING (WEIGHT RATIO) | | VISCOSITY MEASUREMENT RESULTS | | SHAPE | RESIN BLENDING (WEIGHT RATIO) | | | PROPERTIES | | |
|---|---|---|---|---|---|---|---|---|---|---|---|
| | EPOXY RESIN | SOLVENT | ZAHNCUP (sec) | CPS CONVERSION | | RESIN | GLASS FIBER | CARBON FIBER | TENSILE BREAKING STRENGTH (MPa) | BREAKING ELONGATION (%) | TENSILE ELASTIC MODULUS (MPa) |
| INVENTION EXAMPLE 1 | 3 | 100 | 10.1 | 10 OR LESS | INVENTION | 100 | 25.0 | 0.0 | 75 | 10 | 3000 |
| INVENTION EXAMPLE 2 | 15 | 100 | 11.8 | 30 | INVENTION | 100 | 25.0 | 0.0 | 75 | 10 | 3000 |
| INVENTION EXAMPLE 3 | 3 | 100 | 10.1 | 10 OR LESS | INVENTION | 100 | 25.0 | 0.0 | 75 | 10 | 3000 |
| INVENTION EXAMPLE 4 | 3 | 100 | 10.1 | 10 OR LESS | INVENTION | 100 | 25.0 | 0.0 | 75 | 10 | 3000 |
| INVENTION EXAMPLE 5 | 3 | 100 | 10.1 | 10 OR LESS | INVENTION | 100 | 25.0 | 0.0 | 75 | 10 | 3000 |
| INVENTION EXAMPLE 6 | 3 | 100 | 10.1 | 10 OR LESS | INVENTION | 100 | 17.6 | 0.0 | 65 | 12 | 2400 |
| INVENTION EXAMPLE 7 | 3 | 100 | 10.1 | 10 OR LESS | INVENTION | 100 | 33.0 | 0.0 | 88 | 8 | 3500 |
| INVENTION EXAMPLE 8 | 3 | 100 | 10.1 | 10 OR LESS | INVENTION | 100 | 42.8 | 0.0 | 94 | 8 | 4300 |
| INVENTION EXAMPLE 9 | 3 | 100 | 10.1 | 10 OR LESS | INVENTION | 100 | 21.4 | 21.4 | 112 | 5 | 5100 |
| COMPARATIVE EXAMPLE 1 | 25 | 100 | 15.8 | 50 | RELATED ART | 100 | 25.0 | 0.0 | 75 | 10 | 3000 |
| COMPARATIVE EXAMPLE 2 | 3 | 100 | 10.1 | 10 OR LESS | RELATED ART | 100 | 25.0 | 0.0 | 75 | 10 | 3000 |
| COMPARATIVE EXAMPLE 3 | 3 | 100 | 10.1 | 10 OR LESS | RELATED ART | 100 | 25.0 | 0.0 | 75 | 10 | 3000 |

| TYPE | DILUTED ADHESIVE | | | | SHAPE | RESIN | | | | | |
| | BLENDING (WEIGHT RATIO) | | VISCOSITY MEASURE-MENT RESULTS | | | BLENDING (WEIGHT RATIO) | | | PROPERTIES | | |
| | EPOXY RESIN | SOLVENT | ZAHNCUP (sec) | CPS CONVER-SION | | RESIN | GLASS FIBER | CARBON FIBER | TENSILE BREAKING STRENGTH (MPa) | BREAKING ELONGATION (%) | TENSILE ELASTIC MODULUS (MPa) |
| COMPARATIVE EXAMPLE 4 | 3 | 100 | 10.1 | 10 OR LESS | INVENTION | 100 | 0.0 | 0.0 | 65 | 340 | 1200 |
| COMPARATIVE EXAMPLE 5 | 3 | 100 | 10.1 | 10 OR LESS | INVENTION | 100 | 5.3 | 0.0 | 51 | 188 | 1700 |
| COMPARATIVE EXAMPLE 6 | ... | ... | ... | ... | ... | ... | ... | ... | ... | ... | ... |

<Viscosity measurement>

After the coating of the diluted adhesive, the viscosity of the diluted adhesive was measured by ZAHN CUP No. 3 (Made by RIGO CO., LTD.), and the results were described in the viscosity measurement results of Table 1.

From the results of Table 1, the viscosity was 30 CPS or lower in Invention Examples 1 to 9 and Comparative Examples 2 to 5. However, in Comparative Example 1, the viscosity was 50 CPS.

In Comparative Example 1, in a case where the diluted adhesive was coated on the high-tension flat steel wire, liquid pooling occurred on a bottom surface of the high-tension flat steel wire, and it was difficult to uniformly coat the diluted adhesive.

<Fiber-reinforced polyamide resin>

A fiber-reinforced polyamide resin was formed by blending a glass fiber reinforced polyamide resin (trade name; 12 NYLON L1940G30 made by DAICEL EVONIK LTD.) with a polyamide 12 resin (trade name; 12 NYLON L1940W made by DAICEL EVONIK LTD.). The compositional ratio is defined in terms of a weight ratio.

In Invention Examples 1 to 5, the compositional ratio was polyamide 12 resin:glass fiber = 100:25.

The compositional ratio was polyamide 12 resin:glass fiber = 100:17.6 in Invention Example 6, the compositional ratio was polyamide 12 resin:glass fiber = 100:33 in Invention Example 7, and the compositional ratio was polyamide 12 resin:glass fiber = 100:42.8 in Invention Example 8.

In Invention Example 9, carbon fibers (UBESTA 3020GX6 made by UBE INDUSTRIES, LTD.) were added to one obtained by mixing glass fibers with a polyamide resin, and the ratio of these three parties was set to polyamide resin:glass fiber:carbon fiber = 100:21.4:21.4.

In Comparative Examples 1 to 3, the compositional ratio was polyamide 12 resin:glass fiber = 100:25.

In Comparative Example 4, the compositional ratio was polyamide 12 resin:glass fiber = 100:0, that is, only the polyamide resin was used without mixing the glass fibers.

In Comparative Example 5, the compositional ratio was polyamide 12 resin:glass fiber = 100:5.3.

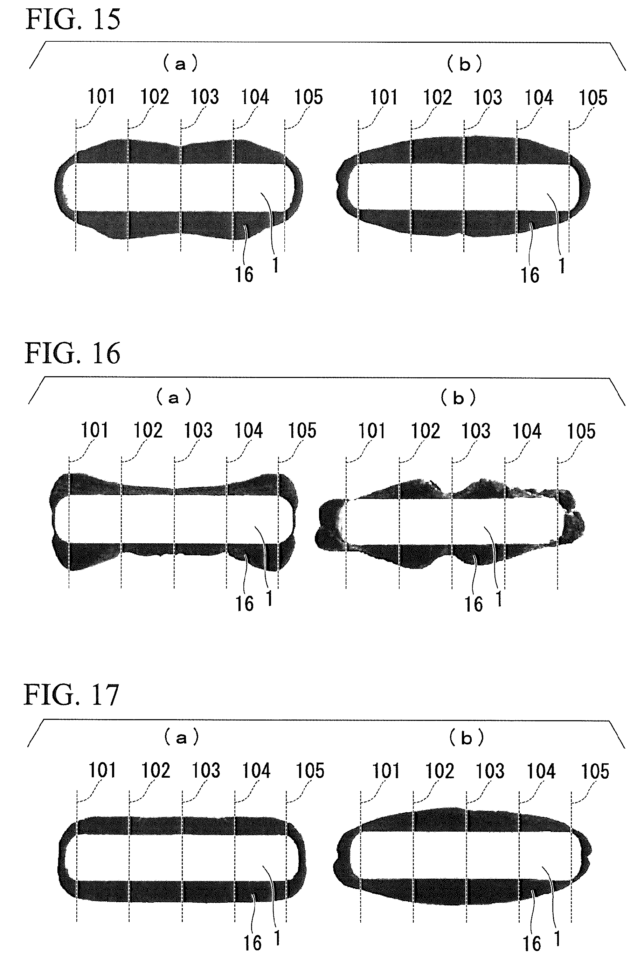

The shape of the resin coated layer 16 formed at an outer periphery of the diluted adhesive layer 15 will be described. The shape of the resin was the sectional shape of the resin-coated high-tension flat steel wire shown in FIG. 4 and (a) of FIG. 15, in the case of "the shape of the invention".

For example, the thickness in the apex $\gamma$(112) of the resin coated layer 16 is 1.7 mm, the thickness in the minimum point $\beta$ (111) where the thickness of the resin coated layer 16 reaches the minimum is 0.8 mm, the thickness in the intersection point $\delta$ (113) between the dotted line 103 and the resin coated layer 16 is 1.1 mm, the thickness in the curved portions at the four corners is 0.8 mm, and the thickness in the central portion $\epsilon$ (114) of each short side of the rectangular shape is 0.5 mm.

<Resin property test>

Resin property tests of the invention examples and the comparative examples were performed.

Tensile breaking strength, breaking elongation, and tensile elastic modulus were measured according to the following conditions, separately using Type-1B1-based test pieces based on JIS K7164 (ISO527-4) with a resin extrusion molding machine.

Resin test pieces of the examples and the comparative examples were based on JIS K7164 (ISO527-4), the measurement of the tensile breaking strength and the breaking elongation was performed at a test speed of 10 mm/min, and the measurement of the tensile elastic modulus was performed at a test speed of 1.0 mm/min. Measurement results are described in the resin properties of Table 1.

The tensile breaking strength was considered as qualified at 60 MPa or more, the breaking elongation passed at 5% or more, and the tensile elastic modulus was considered as qualified at 2000 MPa or more.

Next, although the content of the glass fibers is studied in consideration of the tensile breaking strength of the coated resin, fibers other than the glass fibers can also be used.

Comparative Example 4 is a case where fibers are not blended. In this case, the compositional ratio is polyamide resin:glass fiber = 100:0, and the tensile breaking strength is 65 MPa. Additionally, in Invention Example 6, the compositional ratio is polyamide resin:glass fiber = 100:17.6, and the tensile breaking strength is 65 MPa. However, in polyamide resin:glass fiber = 100:5.3 of Comparative Example 5, the tensile breaking strength is only 51 MPa.

Accordingly, it can be understand that the content of the glass fibers acts as foreign matter against the resin in the case of a small amount, and brings about a decrease in tensile breaking strength and if the content of the glass fibers increases, the tensile breaking strength increases.

With respect to the breaking elongation, there is a great difference between the invention examples and the comparative examples, and the breaking elongation of the invention examples decreases extraordinarily compared to the breaking elongation of Comparative Example 4 and Comparative Example 5.

Also with respect to the tensile elastic modulus, there is a great difference between the invention examples and the comparative examples, and the tensile elastic modulus of the invention examples was two or more times larger than the tensile elastic modulus of Comparative Example 4.

The breaking elongation being small and the tensile elastic modulus being large means that strain with respect to the stress applied in the twisting work or the like that is the secondary work is small, that is, the movement of the resin in the coated layer in the case of the twisting work is small.

«Coating shape test»

The influence that the shape of the coated layer of the high-tension flat steel wire receives from stress, such as a pressure or a shearing force in the secondary work, such as the bending work or twisting work of the resin-coated high-tension flat steel wire was studied.

For example, since the resin shape of Invention Example 1 is the shape of the invention, the sectional view of the resin-coated high-tension flat steel wire is as shown in FIG. 4 and (a) of FIG. 15.

In the resin-coated high-tension flat steel wire before the secondary work, the thickness in the apex $\gamma$ (112) of the resin coated layer 16 is defined as C, the thickness in the minimum point $\beta$ (111) where the thickness of the resin coated layer 16 reaches the minimum is defined as B, and the thickness in the intersection point $\delta$ (113) between the dotted line 103 and the resin coated layer 16 is defined as D.

Additionally, in the resin-coated high-tension flat steel wire after the secondary work, the thickness in the apex $\gamma$ (112) of the resin coated layer 16 is defined as c, the thickness in the minimum point $\beta$ (111) where the thickness of the resin coated layer 16 reaches the minimum is defined as b, and the thickness in the intersection point $\delta$ (113) between the dotted line 103 and the resin coated layer 16 is defined as d.

With respect to Invention Example 1, Invention Examples 3 to 5, and Comparative Examples 2 and 3, the respective coated layer thicknesses (B, C, D) and (b, c, d) before and after the secondary work are measured, and the coated layer thicknesses (unit is mm) and coated layer residual rates (unit is %) are calculated.

The coated layer residual rates are calculated by the following formulas.

$$\text{Coated layer residual rate } b/B = b/B \times 100 \qquad \text{(Formula 1).}$$

$$\text{Coated layer residual rate } c/C = c/C \times 100 \qquad \text{(Formula 2)}$$

$$\text{Coated layer residual rate } d/D = d/D \times 100 \qquad \text{(Formula 3)}$$

In the measurement of the coated layer, respective measurement locations were cut by a fine cutter, and were measured by a microscope.

Targets subjected to coating shape tests were Invention Example 1, Invention Examples 3 to 5, and Comparative Examples 2 and 3.

The cutting plane shapes of Invention Example 1 and Invention Examples 3 to 5 are shown in FIG. 15, the cutting plane shape of Comparative Example 2 is shown in FIG. 16, and the cutting plane shape of Comparative Example 3 is shown in FIG. 17. In all of them, (a) that is a left side in each drawing shows a state before the secondary work, and (b) that is a right side in the drawing shows a state after the secondary work.

A secondary work method will be described below.

<Secondary work method>

The resin-coated high-tension flat steel wires of Invention Example 1, Invention Examples 3 to 5, and Comparative Examples 2 and 3 were subjected to twisting tests that imitated the work of spirally winding a high-tension flat steel wire around a flexible pipe for the purpose of confirming the anti-rust capacity in a case where the high-tension flat steel wire is worked into the flexible pipe.

Although the diameter of the flexible pipe is used to be in as wide a range as 1 inch to 20 inches, a twisting test in which a pipe diameter of 6 inches was supposed was performed.

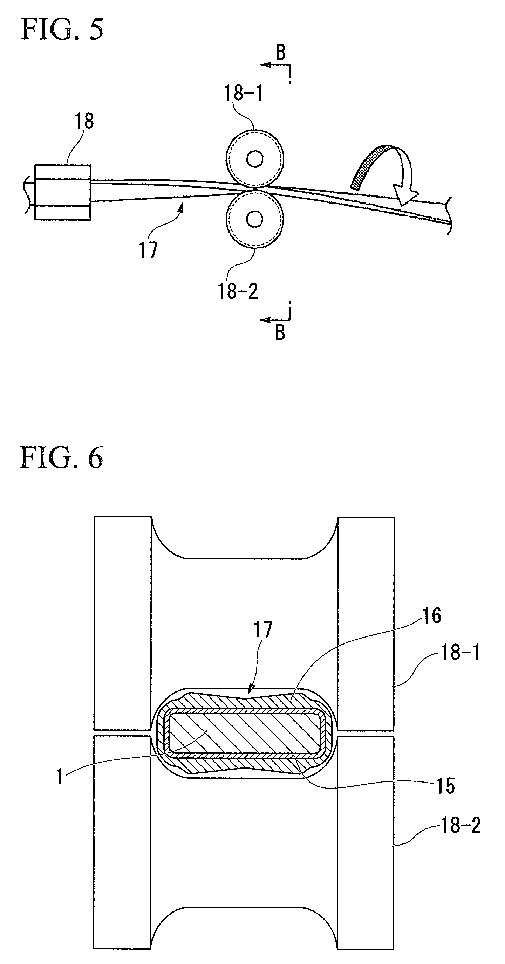

FIG. 5 shows a schematic view of the twisting work roll apparatus used for a twisting test.

In FIG. 5, the reference sign 17 designates the resin-coated high-tension flat steel wire, and reference signs 18, 18-1, and 18-2 designate work rolls.

Two sets of the work rolls 18 constituted of the two work rolls 18-1 and 18-2 that sandwich a high-tension flat steel wire therebetween are arranged at an interval of 100 mm in the longitudinal direction of the high-tension flat steel wire with their directions being changed by 90°, in the twisting work roll apparatus.

As the resin-coated high-tension flat steel wire 17 is inserted between the work rolls 18-1 and 18-2 that are first-stage work rolls and is continuously passed between the work rolls 18-1 and 18-2 that are second-stage work rolls that are arranged with their direction being changed by 90°, the resin-coated high-tension flat steel wire can be twisted in the longitudinal direction.

The twist angle of the resin-coated high-tension flat steel wire 19 after the twisting work was 0.3°/mm.

FIG. 6 is a view showing the work roll 18 consisting of the pair of work rolls 18-1 and 18-2, and is a B-B arrow view of FIG. 5.

As shown in FIG. 6, the work rolls 18-1 and 18-2 have a central portion formed in a concave shape, and prevents the resin-coated high-tension flat steel wire 17 from laterally slipping and coming out of the work rolls during the twisting work.

The pressure applied to the resin-coated high-tension flat steel wire 17 from the work roll 18 in the case of the twisting work was measured by a prescale (trade name; PRESCALE FOR HIGH PRESSURE (HS) made by FUJI FILM CORPORATION). The prescale is that color varies depending on the intensity of pressure to be applied, and the pressure applied to the resin-coated high-tension flat steel wire can be confirmed by pasting the prescale on the surface of the resin-coated high-tension flat steel wire 17 to perform the twisting work and observing a change in the color of the prescale.

It was confirmed from the measurement results obtained using the prescale that the pressure of 100 MPa or more is applied to the circular-arc portions at the four corners of the resin-coated high-tension flat steel wire 17.

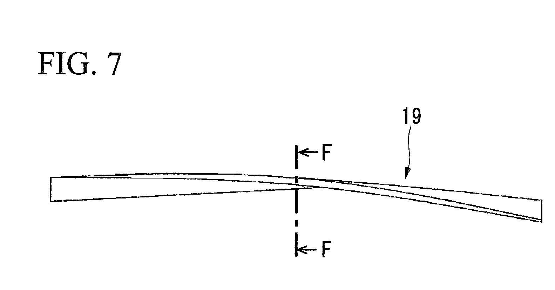

FIG. 7 shows an external view of the resin-coated high-tension flat steel wire 19 after the twisting work.

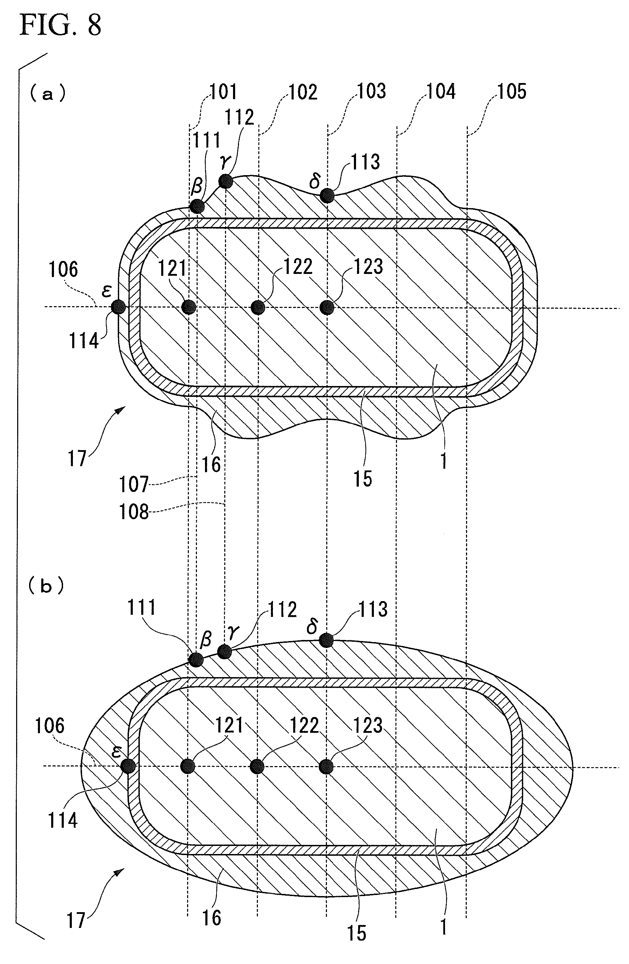

An F-F section schematic view of the resin-coated high-tension flat steel wire 19 after the twisting work is shown in (b) of FIG. 8 and (b) of FIG. 15. In addition, (a) of FIG. 8 is an F-F section schematic view of the resin-coated high-tension flat steel wire 19 before the twisting work, and is the same view as FIG. 4. In (b) of FIG. 8, $\beta$, $\gamma$ and $\delta$ are places where b, c, and d that are the resin coating thicknesses after the twisting work are measured. In a case where (a) of FIG. 8 and (b) of FIG. 8 are contrasted with each other, the measurement places b, c, and d coincide with the measurement places B, C, and D. In addition, in order to assist in understanding of the invention, a $\beta$-associate dotted line 107 and a $\gamma$-associated dotted line 108 are described, and a correspondence relationship between $\beta$ and $\gamma$ before and after the secondary work is described. Additionally, the correspondence relationship of $\gamma$ before and after the secondary work is described by the centerline 103 that passes through the center point 123 and is perpendicular to the centerline 106.

With respect to the examples and the comparative examples, coated layer thicknesses after secondary work tests were measured by a microscope similar to that before the secondary work, and changes in coating thickness before and after the secondary work tests were adopted as coating residual rates. Measurement results are shown in Table 2.

[Table 2]

| | COATED LAYER THICKNESS (mm) | | | | | | COATED LAYER RESIDUAL RATE (%) | | |
|---|---|---|---|---|---|---|---|---|---|
| | BEFORE SECONDARY WORK | | | AFTER SECONDARY WORK | | | (AFTER SECONDARY WORK / BEFORE SECONDARY WORK) X 100 | | |
| | B | C | D | b | c | d | b/B | c/C | d/D |
| INVENTION EXAMPLE 1 | 0.8 | 1.7 | 1.1 | 0.5 | 1.4 | 1.4 | 63 | 82 | 127 |
| INVENTION EXAMPLE 3 | 0.4 | 1.6 | 0.9 | 0.3 | 1.1 | 1.0 | 75 | 69 | 111 |
| INVENTION EXAMPLE 4 | 1.0 | 1.4 | 0.8 | 0.6 | 1.2 | 0.8 | 60 | 86 | 100 |
| INVENTION EXAMPLE 5 | 0.9 | 1.4 | 1.0 | 0.6 | 1.2 | 1.3 | 67 | 86 | 130 |
| COMPARATIVE EXAMPLE 2 | 1.5 | 1.7 | 0.6 | 0.1 | 0.5 | 0.6 | 7 | 35 | 100 |
| COMPARATIVE EXAMPLE 3 | 1.1 | 1.1 | 1.1 | 0.6 | 1.1 | 1.3 | 55 | 100 | 118 |

<Coated layer thickness residual rate b/B>

The resin coated layer of the curved (circular-arc) portions at the four corners can be evaluated by coated layer thickness residual rates b/B.

With respect to Invention Example 1 and Invention Examples 3 to 5, the values of the coated layer thickness residual rates b/B become values of less than 100%. As a result, it could be confirmed that the coated layer thicknesses decrease by means of the secondary work, but it was confirmed that the coated layer thickness residual rates maintain 60% or more.

In all of Comparative Examples 2 and 3, the values of the coated layer thickness residual rates b/B becomes values of less than 100%. As a result, the coated layer thicknesses decrease by means of the secondary work, and the degree of the decrease is greater than those of the respective examples. Particularly in Comparative Example 2, the value of the coated layer thickness residual rate b/B extremely decreased to 7%.

<Coated layer thickness residual rate c/C>

The resin coated layer at the mountain-shaped portions can be evaluated by coated layer thickness residual rates c/C.

With respect to Invention Example 1 and Invention Examples 3 to 5, the values of the coated layer thickness residual rates c/C becomes values of less than 100%. As a result, it could be confirmed that the coated layer thicknesses decrease by means of the secondary work, but it was confirmed that the coated layer thickness residual rates maintain 69%.

Although the value of the coated layer thickness residual rate c/C of Comparative Example 3 was 100% and changeless before and after the secondary work, the value of the coated layer thickness residual rate c/C of Comparative Example 2 extremely decreased to 35%.

<Coated layer thickness residual rate d/D>

The resin coated layer at the central portions can be evaluated by coated layer thickness residual rates d/D.

With respect to Invention Example 1, Invention Example 3, Invention Example 5, and Comparative Example 3, it could be confirmed that the values of the coated layer thickness residual rates d/D are more than 100%, and the values of the coated layer thickness residual rates d/D increase.

With respect to Invention Example 4 and Comparative Example 2, it could be confirmed that the values of the coated layer thickness residual rates d/D are 100% and were changeless before and after the secondary work.

The resin-coated high-tension flat steel wire sectional view before the twisting work of Invention Example 1 is shown in (a) of FIG. 15, and the resin-coated flat steel wire sectional view after the twisting work of Invention Example 1 is shown in (b) of FIG. 15.

The resin-coated high-tension flat steel wire sectional view before the twisting work of Comparative Example 2 is shown in (a) of FIG. 16, and the resin-coated high-tension flat steel wire sectional view after the twisting work of Comparative Example 2 is shown in (b) of FIG. 16.

The resin-coated high-tension flat steel wire sectional view before the twisting work of Comparative Example 3 is shown in (a) of FIG. 17, and the resin-coated high-tension flat steel wire sectional view after the twisting work of Comparative Example 3 is shown in (b) of FIG. 17.

In order to assist in understanding of the invention, dotted lines equivalent to 101, 102,103, 104, and 105 in FIG. 4 are shown in FIGS. 15 to 17.

In Invention Example 1, it can be understood from (a) and (b) of FIG. 15 that the resin coating of the mountain-shaped portions of left and right ends of each long side moves to the central portion of the long side due to the twisting work, and is formed in an elliptical shape as a whole, and the coated resin layers of the circular-arc portions at the four corners maintain a constant thickness.

In Comparative Example 2, it can be understand from (a) and (b) of FIG. 16 that the resin coated layer is largely deformed by the twisting work, the coated resin of the circular-arc portions at the four corners before the work moves to the short side portions and the long side central portions, and the coated resin layer of the circular-arc portions at the four corners is destroyed.

In Comparative Example 3, it can be understand from FIG. 17 that the coated resin of the circular-arc portions at the four corners moves to the short side portions and the long side central portions due to the twisting work, and the thickness of the coated resin layer of the circular-arc portions at the four corners becomes small.

In FIG. 4, the point β of the resin-coated high-tension flat steel wire 17 is a place where the pressure caused by the work roll is applied most.

However, since all of Invention Example 1 and Invention Examples 3 to 5 have the coated shape in which the coated layer of the γ point is thickened compared to the β point, it is particularly considered that the circular-arc portions at the four corners are protected by the thick coated layer at the γ point at the time of the twisting work.

It can be understood that the shape of the resin coated layer of the invention has the high defense capacity of the resin coated layer against the twisting work.

«Coated layer quality inspection»

A damage situation of the resin after the twisting work, a peeling situation (hereinafter referred to as "coated layer quality") of the resin, and the like are inspected using the twisting work roll apparatus.

Specifically, the presence/absence of damage to the resin is confirmed by a pinhole test, the viewing of a surface to be worked, and section observation using the microscope, and the adhesion of the resin after the twisting work is confirmed from an adhesion situation when the coated resin is peeled by a cutter from the high-tension flat steel wire 17 after the twisting work.

A method of the pinhole test will be described.

The pinhole test method was performed based on JSCE-E-141-2010 "Quality standards (proposals) of an internal filling type epoxy resin coated PC steel stranded wire".

Test voltages were 3000 V, 2000 V, and 1000 V, and inspection was performed at a scanning speed: 0.5 m/sec or less. The results are shown in Table 3.

The evaluations of the pinhole test were referred to as "VG" in a case where no pinhole is detected at a test voltage of 3000 V, as "G" in a case where no pinhole is detected at a test voltage of 2000 V, as "F" in a case where no pinhole is detected at a test voltage of 1000 V, and as "NG" in a case where a pinhole is detected at a test voltage of 1000 V

Additionally, the evaluations being "VG", "G", and "F" were considered as qualified.

[Table 3]

|  | SHAPE OF RESIN | TWISTING WORK EVALUATION | |
| --- | --- | --- | --- |
|  |  | PINHOLE TEST | ADHESION OF RESIN |
| INVENTION EXAMPLE 1 | SHAPE OF INVENTION | VG | VG |
| INVENTION EXAMPLE 3 | SHAPE OF INVENTION | F | F |
| INVENTION EXAMPLE 4 | SHAPE OF INVENTION | F | F |
| INVENTION EXAMPLE 5 | SHAPE OF INVENTION | G | F |
| INVENTION EXAMPLE 6 | SHAPE OF INVENTION | VG | VG |
| INVENTION EXAMPLE 7 | SHAPE OF INVENTION | VG | VG |
| INVENTION EXAMPLE 8 | SHAPE OF INVENTION | VG | VG |
| COMPARATIVE EXAMPLE 2 | SHAPE OF RELATED ART | NG | NG |
| COMPARATIVE EXAMPLE 3 | SHAPE OF RELATED ART | NG | NG |

The results of the pinhole test will be described.

With respect to Invention Example 1 and Invention Examples 3 to 8, no pinhole was detected in any of the examples at a test voltage of 1000 V, and the evaluations were "VG", "G", and "F", and were qualified.

In the case of a test voltage of 2000 V, no pinhole was detected in Invention Example 1 and Invention Examples 5 to 8. Additionally, in Invention Example 1 and Invention Examples 6 to 8, no pinhole was detected at a test voltage of 3000 V defined in JSCE-E-141-2010.

In Comparative Examples 2 and 3, a pinhole was detected at a test voltage of 1000 V.

This shows that the shape of the invention is effective in the suppression of generation of a pinhole after the twisting work.

An inspection method of an adhesion state of the resin after the twisting work will be described.

The coated resin is peeled by a cutter from the high-tension flat steel wire 19 after the twisting work, and the adhesion state when the coated resin is peeled is visually confirmed.

The evaluations of the adhesion state of the resin were referred to as "VG" in the case where no damage to the coated resin is seen, as "G" in a case where the peeling of the resin is seen in one place of the circular-arc portions at the four corners, as "F" in a case where the peeling of the resin is seen in two or more places of the circular-arc portions at the four corners, and as "NG" in a case where the peeling of the resin was continuously seen over the entire surface of the coated resin.

From a viewpoint of practicality, the evaluations being "VG", "G", and "F" were considered as qualified.

The test results of the adhesion state of the resin after the twisting work will be described.

In Invention Example 1 and Invention Examples 6 to 8, no damage to the coated resin was seen after the twisting work, the evaluations were "VG", a situation in which the high-tension flat steel wire and the coated resin adhere to each other was confirmed, and the evaluations were qualified.

In Invention Examples 3 to 5, the peeling or the like of the resin occurred in some of the four corners, and the evaluates were "F" and were qualified.

In Comparative Examples 2 and 3, the peeling of the resin was continuously confirmed over the entire surface of the coated resin, and the evaluations were "NG" and were disqualified.

This shows that the shape of the invention is effective in maintaining the adhesion state of the resin after the twisting work.

«Hydrogen sulfide resistance evaluation test»

Hydrogen sulfide resistance evaluation tests were performed on a resin-coated high-tension flat steel wire of Invention Example 7 and a non-coated high-tension flat steel wire of Comparative Example 6 before the secondary work.

Comparative Example 6 is a high-tension flat steel wire in which resin coating treatment is not performed.

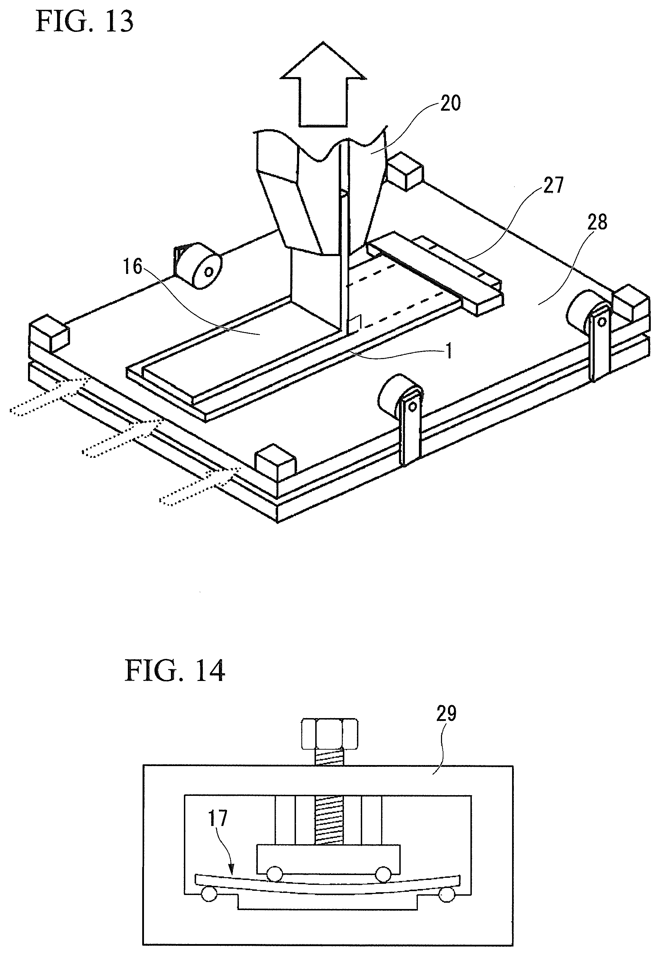

In a state where both ends of the high-tension flat steel wires of Invention Example 7 and Comparative Example 6 were subjected to anti-rust treatment, the high-tension flat steel wires were installed in a state where stress was loaded by a SSC test jig 29 shown in FIG. 14, and were provided for 720 hours under a hydrogen sulfide environment on the basis of NACE TM 0177.

The results of the hydrogen sulfide resistance evaluation tests will be described.

In the high-tension flat steel wire of Comparative Example 6 in which resin coating is not performed, corrosion cracking caused by the stress for 48 hours occurred and broke completely, and the evaluation was disqualified.

The resin-coated high-tension flat steel wire of Invention Example 7 has no generation of rust even after 720-hour load, was perfect, and was qualified.

It was confirmed from the test results that the resin-coated high-tension flat steel wire of the invention prevents generation of cracks caused by hydrogen embrittlement, and it is possible to cope with making the flexible pipe long and large and lengthening the service life.

«Corrosion resistance evaluation test»

Corrosion resistance after the twisting work was evaluated on the resin-coated high-tension flat steel wire of Invention Example 7 and the non-coated high-tension flat steel wire of Comparative Example 6 before the secondary work.

With respect to three resin-coated high-tension flat steel wires of Invention Example 7 and Comparative Example 6, corrosion resistance evaluation tests were performed by the evaluation of 2400 hours by a salt spray test device on the basis of JIS Z 2371, in a state where both the ends were subjected to anti-rust treatment after the twisting work. Generation of rust was confirmed visually.

In all the three resin-coated high-tension flat steel wires of Invention Example 7, generation of rust could not be confirmed even after 2400 hours, and the evaluation was qualified.

However, generation of rust could be confirmed in Comparative Example 6, and the evaluation was disqualified.

[Example 2]

In Example 2, the performance of the resin-coated high-tension flat steel wire of the invention being sufficiently practical will be described in detail. However, the invention is not limited only to the following invention examples.

«Peeling test»

In order to confirm that the adhesion state of the resin coated on the resin-coated high-tension flat steel wire of the invention is strong, a peeling test was performed on the resin-coated high-tension flat steel wire of Invention Example 7 to confirm the adhesive strength to the steel wire of the coated layer.

A test method was performed using a 90° peeling test machine shown in FIG. 13, with reference to the standard defined in JIS K 6854-1 .

As for the peeling test, as shown in FIG. 13, the resin-coated high-tension flat steel wire 1 is fixed to a specimen 27 for the 90° peeling test, a portion of 10 mm in width x 100 mm in length of the resin coated layer 16 of the resin-coated high-tension flat steel wire 1 is left, and the other portion is peeled in advance so that the coated resin layer 16 is not damaged. Then, the coated resin layer 16 that was peeled in advance is bent by 90° and is fixed to a chuck part 20.

In the 90° peeling test, a peeling test jig 28 is made to slide so that the resin coated layer to be peeled maintains the bending angle of 90°, and the ascending speed of the chuck part 20 is 50 mm/min.

As for test temperature, since the usage environment of flexible pipes for the submarine conveyance of petroleum may be under high temperature, tests were performed at respective temperatures of 20, 40, 60, 80, 100, and 120°C. The peeling strengths and the breaking forms in the respective temperature environments are shown in Table 4.

[Table 4]

| TEMPERATURE (°C) | 20 | 40 | 60 | 80 | 100 | 120 |
|---|---|---|---|---|---|---|
| PEELING STRENGTH (N) | 121.6 | 155.2 | 99.5 | 73.3 | 44.2 | 25.0 |
| BREAKING FORM | RESIN BREAKING | RESIN BREAKING | INTERMEDIATE PEEUNG | INTERFACE PEELING | INTERFACE PEEUNG | INTERFACE PEELING |

Table 4 will be described.

Under environments in which the test temperatures are 20°C and 40°C, a resin coated layer broke before the resin coated layer peeled from the high-tension flat steel wire surface. Thus, the strengths at the time of the breaking of the coated layer were written.

In the test temperature of 60°C, a situation in which the resin coated layer remained in part on the high-tension flat steel wire at the time of a test was recognized.

If the test temperature reaches 80°C or higher, the resin coated layer was peeled without remaining in the high-tension flat steel wire.

It is estimated from these results that the adhesive strength of the diluted adhesive exceeds a peeling strength under the environments in which the test temperatures are 20°C and 40°C, the adhesive strength of the diluted adhesive falls below the peeling strength conversely if the test temperature reaches 80°C or higher, and the adhesive strength of the diluted adhesive is equal to the peeling strength under an environment of 60°C.

It could be confirmed that, although the peeling strength, that is, the adhesive strength of the diluted adhesive decreases with a rise in test temperature, the peeling strength is 25 (N) even in an environment of 120°C, and the high-tension flat steel wire and the resin coated layer firmly adhere to each other.

«Tensile strength test»

A tensile strength test is performed in order to confirm that the strength of the resin-coated high-tension flat steel wire of the invention does not become lower than the strength of a base material by virtue of coating the resin.

The tensile strength test were performed on Invention Example 7 and Comparative Example 6, that is, the resin-coated high-tension flat steel wire and the non-resin-coated high-tension flat steel wire. Comparative Example 6 is the non-resin-coated high-tension flat steel wire, and is an example of the base material.

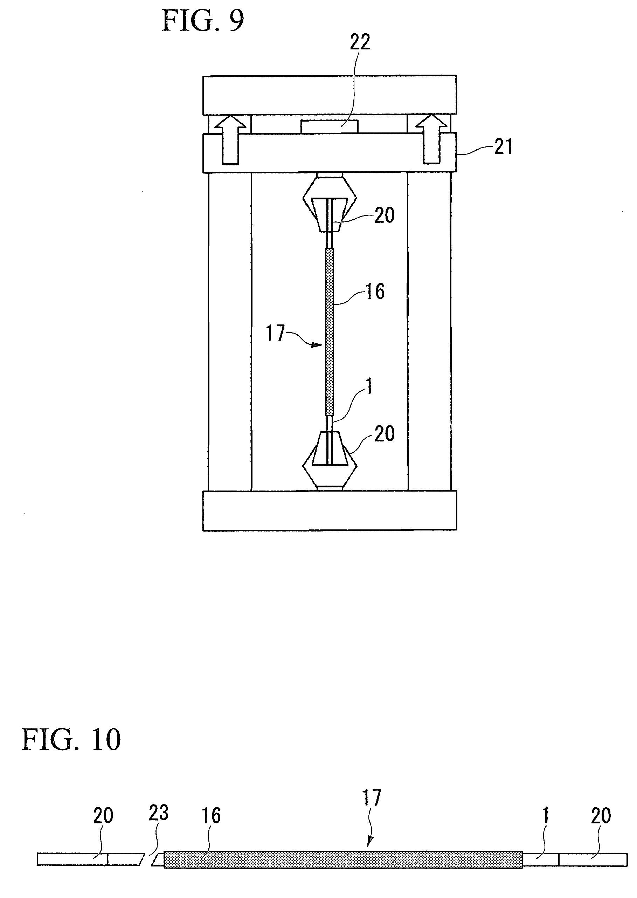

The tensile strength test was performed using a tension tester of JIS Z 2241 shown in FIG. 9. As shown in FIG. 9, the resin-coated high-tension flat steel wire 17 is fixes to the chuck part 20 in a state where coating of about 100 mm is peeled from both ends of the wire for prevention of slip of a specimen, a tension test is performed by the tension tester 21, and the strength at the time of breaking is measured 3 times by a load cell 22. The breaking situation of the resin-coated high-tension flat steel wire and the non-resin-coated high-tension flat steel wire is shown in FIG. 10, and the measurement results are shown in Table 5.

[Table 5]

| | BREAKING STRENGTH (MPa) | | | |
|---|---|---|---|---|
| | NO.1 | NO.2 | NO.3 | AVERAGE |
| INVENTION EXAMPLE 7 | 2023 | 2060 | 2057 | 2047 |
| COMPARATIVE EXAMPLE 6 | 2014 | 2006 | 2017 | 2012 |

Table 5 will be described.

In Invention Example 7, a decrease in breaking strength caused by coating work was not seen, and the breaking strength tended to increase more than that of Comparative Example 6.

Additionally, as shown in FIG. 10, breaking in the coated portion was not seen between the chuck part 20 and the coated layer 16 in a breaking place 23 of the resin-coated high-tension flat steel wire of Invention Example 7. It is estimated from this that the resin coating of the invention reinforced the tensile strength of the high-tension flat steel wire.

In addition, neither damage nor peeling was seen in the resin coated layer with respect to the elongation of the resin-coated high-tension flat steel wire caused by the present test.

It could be confirmed from above that the strength of the resin-coated high-tension flat steel wire of the invention does not become lower than the strength of the base material by virtue of coating the resin.

«Bending work test»

In order to confirm that the blending amount of fibers of the resin coating used for the resin-coated high-tension flat steel wire of the invention is a proper value, bending work tests were performed on the resin-coated high-tension flat steel wires of Invention Examples 6 to 8.

A bending work test method will be described.

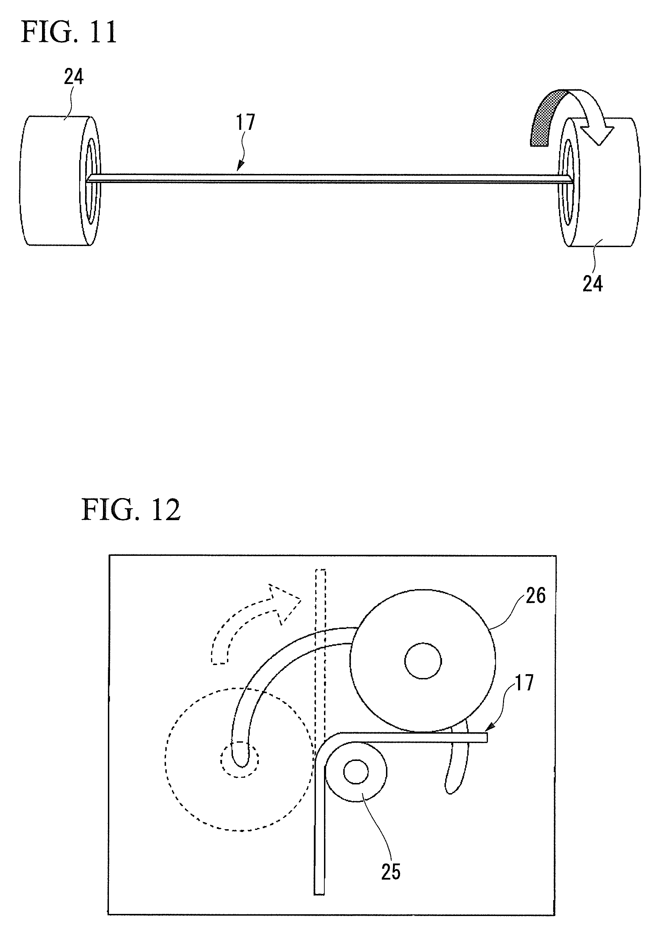

In the bending work test, the visual confirmation of the presence/absence of damage, the pinhole test, and the inspection of the adhesion state of the resin were performed with respect to the resin coating after bending work was performed using a bending work testing machine shown in FIG. 12 with reference to Standard JSCE-E 515-2003 of Japan Society of Civil Engineers.

The bending work was performed by, in FIG. 12, setting the resin-coated high-tension flat steel wire 17 between a fulcrum roll 25 with a radius(bending radius) of 40 mm and a force point roll 26 and moving the force point roll to a position where the resin-coated high-tension flat steel wire is bent to 90°.

The results obtained by visually confirming the presence/absence of damage of the surface of the coating will be described.

Invention Example 6 was evaluated as "VG" because no damage was recognized. Invention Example 7 was evaluated "G" because very fine cracks were confirmed on the surface of the resin coated layer. Invention Example 8 was evaluated "F" because slightly fine cracks were confirmed on the surface of the resin coated layer. The results are described in Table 6.

In a case where fine cracks reached even the steel material, the evaluation was "NG" and was disqualified. However, it could be confirmed that, if the evaluations were "VG", "G", and "F", the evaluations were qualified, and Invention Examples 6 to 8 were qualified.

[Table 6]

| | EVALUATION OF BENDING WORK | | |
| --- | --- | --- | --- |
| | PRESENCE/ABSENCE OF DAMAGE | PINHOLE TEST | ADHESION OF RESIN |
| INVENTION EXAMPLE 6 | VG | VG | VG |
| INVENTION EXAMPLE 7 | G | VG | VG |
| INVENTION EXAMPLE 8 | F | VG | VG |

The pinhole test and the adhesion state inspection of the resin were performed similar to the aforementioned coated layer quality inspection. The results are described in Table 6.

Invention Examples 6 to 8 were evaluated as "VG" in which no pinhole was is discovered, and were evaluated as "VG" in which no damage to the coated resin is viewed, with respect to the adhesion state of the resin.

It could be confirmed that, if the evaluations were "VG", "G", and "F", the evaluations were qualified, and Invention Examples 6 to 8 were qualified.

It could be confirmed from above that the blending amount of fibers of the resin coating used for the resin-coated high-tension flat steel wire of the invention was a proper value.

«Twisting test»

A twisting test was performed for the purpose of confirming that the resin-coated high-tension flat steel wire of the invention can withstand a severe environment.

The twisting test was performed on the resin-coated high-tension flat steel wire of Invention Example 7.

In the twisting test, a twisting testing machine with a distance between chucks of 500 mm shown in FIG. 11 was used, both ends of the resin-coated high-tension flat steel wire 17 with a length of 700 mm was fixed, and one of a pair of fixing parts 24 was rotated until the steel material broke.

The results of the twisting test will be described.

The resin-coated high-tension flat steel wire of Invention Example 7 broke at 4.5 rotations. It was confirmed that, since the twisting value 4.5 rotations/500 mm is equivalent to 3.24° if the twisting value is converted in mm, and is about 10 times larger than the twisting angle 0.3°/mm of the twisting work, this twisting value does not become a large problem when a flexible pipe is worked.

Additionally, it was confirmed that no damage occurred in the coated resin except for a steel material breaking portion after the breaking, and the adhesion between the resin coated layer and the high-tension flat steel wire is excellent.

It could be confirmed from above that the resin-coated high-tension flat steel wire of the invention can withstand a severe environment.

[Industrial Applicability]

The resin-coated high-tension flat steel wire of the invention can be used as various kinds of reinforcing materials including a reinforcing material in submarine cables or pipes for the submarine conveyance of petroleum. Additionally, the production method for a resin-coated high-tension flat steel wire of the invention is applicable to the production that requires the control of coating thickness.

[Brief Description of the Reference Symbols]

1: HIGH-TENSION FLAT STEEL WIRE
2: COIL
3: DELIVERY DEVICE
4: WIRE STRAIGHTENING MACHINE
5: SAND BLASTER
6: RESIN COATING APPARATUS
7: HEATING DEVICE
8: EXTRUDER
9: CROSS-HEAD
10: MOLDING DIE
11: COOLING DEVICE
12: TAKE-OFF DEVICE
13: WINDING DEVICE
14: PRODUCT COIL
15: DILUTED ADHESIVE LAYER
16: RESIN COATED LAYER
17: RESIN-COATED HIGH-TENSION FLAT STEEL WIRE
18: TWISTING WORK ROLL
19: RESIN-COATED HIGH-TENSION FLAT STEEL WIRE AFTER TWISTING WORK
20: CHUCK PART
21: TENSION TESTER
22: LOAD CELL
23: STEEL MATERIAL BREAKING PART
24: TWISTING INSTUMENT FOR TWISTING TEST
25: FULCRUM ROLL
26: FORCE POINT ROLL
27: SPECIMEN OF 90° PEELING TEST
28: PEELING TEST JIG
29: SSC TEST JIG
30: MOLD USED FOR PRODUCTION METHOD OF INVENTION
31: SPACE PART OF SECTION OF MOLD 30
31 a: FOUR CURVED CORNER
31b: PROTRUSION THAT FORMS MINIMUM THICKNESS OF RESIN COATED LAYER
31 c: RECESS THAT FORMS MOUNTAIN SHAPE WHERE RESIN COATED LAYER HAS APEX
91: LONG SIDE OF RECTANGULAR SECTION OF HIGH-TENSION FLAT STEEL WIRE 1
911: LONG SIDE LEFT END POINT
912: LONG SIDE RIGHT END POINT
92: SHORT SIDE OF RECTANGULAR SECTION OF HIGH-TENSION FLAT STEEL WIRE 1
93: LONG SIDE OF RECTANGULAR SECTION OF HIGH-TENSION FLAT STEEL WIRE 1
94: SHORT SIDE OF RECTANGULAR SECTION OF HIGH-TENSION FLAT STEEL WIRE 1
101: DOTTED LINE THAT PASSES THROUGH LONG SIDE LEFT END POINT 911 AND IS PERPENDICULAR TO 106
102: DOTTED LINE THAT PASSES THROUGH LEFT MIDDLE POINT 122 AND IS PERPENDICULAR TO 106
103: DOTTED LINE THAT PASSES THROUGH CENTER POINT 123 AND IS PERPENDICULAR TO 106
104: DOTTED LINE THAT PASSES THROUGH RIGHT MIDDLE POINT 124 AND IS PERPENDICULAR TO 106
105: DOTTED LINE THAT PASSES THROUGH LONG SIDE RIGHT END POINT 912 AND IS PERPENDICULAR TO 106
106: DOTTED LINE PASSING THROUGH CENTER OF HIGH-TENSION FLAT STEEL WIRE 1 IN LATERAL DIRECTION
107: β-ASSOCIATED DOTTED LINE
108: γ-ASSOCIATED DOTTED LINE
121: LEFT END POINT
122: LEFT MIDDLE POINT
123: CENTER POINT

124: RIGHT MIDDLE POINT
125: RIGHT END POINT
111: ONE-FOURTH SEGMENT MINIMUM POINT β
112: ONE-FOURTH SEGMENT APEX γ
113: INTERSECTION POINT δ BETWEEN DOTTED LINE 103 AND SURFACE OF RESIN COATED LAYER 16

**Claims**

1.  A resin-coated high-tension flat steel wire comprising:

    a high-tension flat steel wire; and
    a fiber-reinforced polyamide resin coated layer having a breaking strength of 60 MPa or more and a tensile elastic modulus of 2000 MPa or more and being adhered to the high-tension flat steel wire via a diluted adhesive,

    wherein a shape of the high-tension flat steel wire when viewed from a section perpendicular to a longitudinal direction thereof is a rectangular shape including curved portions at four corners thereof, and
    a shape of the fiber-reinforced polyamide resin coated layer in the rectangular section makes a pinhole detection proportion in a 1000 V voltage resistance pinhole test of the resin-coated high-tension flat steel wire subjected to the secondary work 0%.

2.  A resin-coated high-tension flat steel wire comprising:

    a high-tension flat steel wire; and
    a fiber-reinforced polyamide resin coated layer having a breaking strength of 60 MPa or more and a tensile elastic modulus of 2000 MPa or more and being adhered to the high-tension flat steel wire via a diluted adhesive,

    wherein a shape of the high-tension flat steel wire when viewed from a section perpendicular to a longitudinal direction thereof is a rectangular shape including curved portions at four corners thereof, and
    when, among four straight lines that form the rectangular section, the ranges from both end points of the straight lines that form long sides to one fourth of the length of the straight lines are respectively defined as one-fourth segments, a shape of the fiber-reinforced polyamide resin coated layer in the rectangular section, a shape of the fiber-reinforced polyamide resin coated layer in the rectangular section includes a mountain shape having an apex within each of the one-fourth segments, and includes a minimum point, where the thickness of the fiber-reinforced polyamide resin coated layer is the minimum, between the apex and both the ends within each of the one-fourth segments.

3.  The resin-coated high-tension flat steel wire according to Claim 2,
    wherein the thickness of the coated layer is 1.4 mm to 2.0 mm at the position of the apex, is 0.4 mm to 1.4 mm at the position of the minimum point, is 0.5 mm to 1.4 mm at the position of each of the curved portions, and is 0.7 mm to 1.7 mm at the position of a central portion of each of the long sides.

4.  The resin-coated high-tension flat steel wire according to Claim 3,
    wherein the thickness of the coated layer is 0.3 mm to 0.8 mm in a central portion of the straight line that forms each of short sides of the rectangular shape.

5.  The resin-coated high-tension flat steel wire according to any one of Claims 1 to 4,
    wherein the fiber-reinforced polyamide resin has a compositional ratio of polyamide resin:fiber = 100:15 to 45 in terms of a weight ratio, and
    the fibers include only at least one or more of glass fibers, carbon fibers, and inorganic fibers.

6.  The resin-coated high-tension flat steel wire according to any one of Claims 1 to 5, wherein the polyamide resin is polyamide 12.

7.  The resin-coated high-tension flat steel wire according to any one of Claims 1 to 6,
    wherein the diluted adhesive is obtained by diluting bisphenol A type epoxy resin with a solvent in a ratio of epoxy resin:solvent = 3 to 15:100 in terms of a weight ratio.

8. The resin-coated high-tension flat steel wire according to any one of Claims 1 to 7,
wherein the adhesive strength in a 100°C atmosphere between the resin-coated high-tension flat steel wire and a coated resin layer is 40 N or more per 10 mm width.

9. The resin-coated high-tension flat steel wire according to any one of Claims 1 to 8,
wherein, in a section perpendicular to a longitudinal direction of the high-tension flat steel wire, the curved portions at the four corners form a circular-arc shape, a breaking strength is 1400 MPa or more, a breaking elongation is 2% or more, and a twisting value in which the distance between chucks is 500 mm is 12 times or more.

10. A production method for a resin-coated high-tension flat steel wire comprising:

a process of coating a diluted adhesive on a surface of a high-tension flat steel wire;
a process of heating the diluted adhesive to 200°C to 300°C and forming the diluted adhesive into a layer in a half-cured state; and
a process of extrusion-coating fiber-reinforced polyamide resin on the diluted adhesive formed into a layer in a half-cured state, using a mold having a predetermined shape when viewed from a section perpendicular to an extrusion direction, in a state where the fiber-reinforced polyamide resin is heated to 220°C to 230°C and melted,

wherein the predetermined shape of the mold is a rectangular shape including curved portions at four corners thereof, and
when, among four straight lines that form the rectangular shape, the ranges from both end points of the straight lines that form long sides to one fourth of the length of the straight lines are respectively defined as one-fourth segments, a recess in which the fiber-reinforced polyamide resin coated layer forms a mountain shape having an apex is provided within each of the one-fourth segments, and a protrusion that forms a minimum thickness portion of the fiber-reinforced polyamide resin coated layer is provided between the apex and both the ends within each of the one-fourth segments.

FIG. 1

FIG. 2

FIG. 3

FIG. 4

FIG. 5

FIG. 6

FIG. 7

# FIG. 8

(a)

(b)

FIG. 9

FIG. 10

FIG. 11

FIG. 12

## FIG. 13

## FIG. 14

## FIG. 15

(a)

101 102 103 104 105

16 1

(b)

101 102 103 104 105

16 1

## FIG. 16

(a)

101 102 103 104 105

16 1

(b)

101 102 103 104 105

16 1

## FIG. 17

(a)

101 102 103 104 105

16 1

(b)

101 102 103 104 105

16 1

FIG. 18

31a    31b    31c              31c    31b   31a

31

31a  31b   31c                        31c  31b   31a

30

## INTERNATIONAL SEARCH REPORT

| International application No. |
|---|
| PCT/JP2015/050352 |

**A. CLASSIFICATION OF SUBJECT MATTER**
*B32B1/00*(2006.01)i, *B29C47/02*(2006.01)i, *B32B15/08*(2006.01)i, *C08K7/02*(2006.01)i, *C08L77/00*(2006.01)i, *C08L77/02*(2006.01)i, *B29L9/00*(2006.01)n

According to International Patent Classification (IPC) or to both national classification and IPC

**B. FIELDS SEARCHED**

Minimum documentation searched (classification system followed by classification symbols)
B32B1/00, B29C47/02, B32B15/08, C08K7/02, C08L77/00, C08L77/02, B29L9/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-527065 A (N.V. Bekaert S.A.), 01 November 2012 (01.11.2012), claims 1, 11; paragraph [0003]; fig. 3 & US 2012/0060980 A1    & WO 2010/130533 A1 | 1-10 |
| A | JP 8-294994 A (Nippon Steel Corp.), 12 November 1996 (12.11.1996), claim 1; paragraphs [0003], [0005], [0012], [0019], [0020] (Family: none) | 1-10 |
| A | JP 2003-291253 A (Mitsubishi Gas Chemical Co., Inc.), 14 October 2003 (14.10.2003), claims 1, 2, 3; paragraphs [0004], [0009] & US 2003/0190478 A1    & EP 1350822 A1 | 1-10 |

| [×] Further documents are listed in the continuation of Box C. | [ ] See patent family annex. |
|---|---|

\* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 April 2015 (06.04.15) | 14 April 2015 (14.04.15) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (July 2009)

**INTERNATIONAL SEARCH REPORT**

International application No.

PCT/JP2015/050352

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-126010 A  (Sanoh Industrial Co., Ltd.), 11 June 2009 (11.06.2009), claim 1; paragraphs [0009], [0016], [0017] & US 2010/0247947 A1    & WO 2009/066721 A1 | 1-10 |
| A | JP 2004-43975 A  (Kabushiki Kaisha Times Engineering), 12 February 2004 (12.02.2004), claim 1; paragraph [0008] (Family: none) | 1-10 |
| A | JP 2007-15286 A  (Kabushiki Kaisha Times Engineering), 25 January 2007 (25.01.2007), claims; paragraph [0002] (Family: none) | 1-10 |
| A | JP 6-42524 A  (Nippon Cable System, Inc.), 15 February 1994 (15.02.1994), claim 1; paragraph [0011] (Family: none) | 1-10 |
| A | JP 2010-229468 A  (Nippon Steel Corp.), 14 October 2010 (14.10.2010), claims; paragraphs [0001], [0002], [0005] (Family: none) | 1-10 |
| A | JP 2010-230105 A  (Chuo Spring Co., Ltd.), 14 October 2010 (14.10.2010), claims 1, 2; paragraphs [0015], [0016] (Family: none) | 1-10 |

Form PCT/ISA/210 (continuation of second sheet) (July 2009)

**EP 3 093 134 A1**

**Patent documents cited in the description**

- JP 2014002169 A
- JP 2004043975 A
- JP 2007015286 A

- JP 2011147845 A
- JP 2010229468 A
- JP 2012527065 A